# FASCICULE DE BREVET EUROPEEN

(11) **EP 2 165 250 B1**
(45) Date de publication et mention de la délivrance du brevet: **27.03.2013**
(21) Numéro de dépôt: 08774216.9
(22) Date de dépôt: 23.06.2008
(51) Int. Cl.: G06F 3/045

(54) **DISPOSITIF DE COMMANDE ÉLECTRIQUE**
ELEKTRISCHE STEUEREINRICHTUNG
ELECTRIC CONTROL DEVICE

(30) Priorité: 25.06.2007 FR 0704526
(43) Date de publication de la demande: 24.03.2010
(73) Titulaire: DAV, 94000 Creteil (FR)
(72) Inventeur: VANHELLE, Stéphane, F-74970 Marignier (FR); DALMAYRAC, Stéphane, F-74100 Annemasse (FR)
(74) Mandataire: Benoit, Monique
(86) Numéro de dépôt international: PCT/EP2008/057942
(87) Numéro de publication internationale: WO 2009/000800

(56) Documents cités:
- WO-A-2005/050428
- FR-A- 2 538 991
- US-A- 4 310 839
- US-A- 4 618 754
- US-A- 4 771 139
- US-A1- 2004 085 299
- "TOUCH-RESPONSIVE DEVICES ENABLE NEW APPLICATIONS" EDN ELECTRICAL DESIGN NEWS, REED BUSINESS INFORMATION, HIGHLANDS RANCH, CO, US, vol. 38, no. 2, 21 janvier 1993 (1993-01-21), pages 39-40,42,44, XP000328326 ISSN: 0012-7515

## Description

La présente invention concerne un dispositif de commande électrique comprenant une surface tactile, par exemple pour un mécanisme motorisé d'ouverture et / ou de fermeture d'au moins un ouvrant, pour un organe électronique d'écran multimédia ou pour un système de climatisation, notamment pour véhicules automobiles.

Les dispositifs de commande électrique intégrant des capteurs à surface tactile permettent de détecter un appui simple du doigt d'un utilisateur et, en fonction de la position de l'appui détecté et/ou du déplacement ultérieur de cet appui sur la surface, de déclencher un type particulier d'action ou de commande d'organe tel que d'un véhicule automobile. On pourra se référer par exemple aux documents FR 2 798 329, FR 2 800 885 et US 6 157 372. Ces surfaces tactiles peuvent être de tout type et utiliser différentes technologies.

Ainsi par exemple la technologie utilisant des résistances sensibles à la pression (également connu sous le nom de capteur FSR pour « Force Sensing Resistor ») devance de plus en plus d'autres technologies équivalentes, comme par exemple des technologies capacitives ou encore optiques, grâce à sa facilité de mise en oeuvre et à sa robustesse.

De tels capteurs sont par exemple connus sous le nom « tablette digitalisante » (dénomination anglaise "Digitizer pad") et on cite comme art antérieur les documents suivants : US 4,810,992, US 5,008,497, FR 2683649 ou encore EP 0 541 102.

Ces capteurs comprennent une surface tactile comportant des couches semiconductrices prises en sandwich entre par exemple une couche conductrice et une couche résistive.

En exerçant une pression sur la surface tactile, la résistance ohmique de la surface tactile diminue, permettant ainsi, par application d'une tension adaptée, de mesurer la pression appliquée et / ou la localisation de l'endroit où la pression est exercée.

Dans le domaine automobile, au vu du nombre croissant d'organes électriques à commander, les dispositifs de commande multifonction sont de plus en plus utilisés du fait des avantages ergonomiques qui en résultent.

Toutefois, les dispositifs de commande par surfaces tactiles sont des technologies onéreuses limitant leur utilisation à la couverture de petites surfaces de commande.

Par ailleurs, l'assemblage de surfaces tactiles de grande dimension peut poser des problèmes de réalisation, notamment lors du collage de la surface tactile dans le dispositif de commande.

Ainsi, il peut être avantageux d'associer ces surfaces tactiles aux solutions classiques de commande tels que les commutateurs / interrupteurs dans un même dispositif de commande.

La surface tactile de commande permet alors par exemple, de sélectionner une commande dans des menus déroutantes pour commander par exemple la climatisation, le système audio ou encore le système de navigation.

Un appui ultérieur sur un commutateur permet, par exemple, de valider l'étape de sélection de la commande.

Cependant, ces deux technologies de commande doivent pouvoir être intégrées dans un dispositif multifonction de commande présentant une surface active de commande uniforme pour être d'utilisation transparente par l'utilisateur.

La présente invention vise donc à proposer un dispositif de commande électrique ergonomique pour l'utilisateur permettant d'assurer les deux fonctions de sélection et d'actionnement d'un commutateur.

A cet effet, l'invention a pour objet un dispositif de commande comportant une plaque présentant au moins une première et une deuxième portion adjacentes, une couche souple de protection recouvrant la plaque et un capteur à surface tactile disposé en sandwich entre ladite couche de protection et la première portion de la plaque, caractérisé en ce qu'il comprend au moins un film charnière reliant la première à la deuxième portion pour articuler les deux portions l'une par rapport à l'autre, la première portion étant fixe, et au moins un commutateur associé à la deuxième portion qui est mobile en pivotement entre une position de repos soulevée et une position active pour pouvoir activer le commutateur.

D'autres caractéristiques et avantages de l'invention ressortiront de la description suivante, donnée à titre d'exemple, sans caractère limitatif, en regard des dessins annexés sur lesquels :
- la figure 1 est une vue en éclaté et en perspective d'un dispositif de commande selon l'invention, et
- la figure 2 est une vue en coupe d'un dispositif de commande de la figure 1 assemblé,
- la figure 3 est une vue de dessus d'un dispositif de commande selon un second mode de réalisation de l'invention.

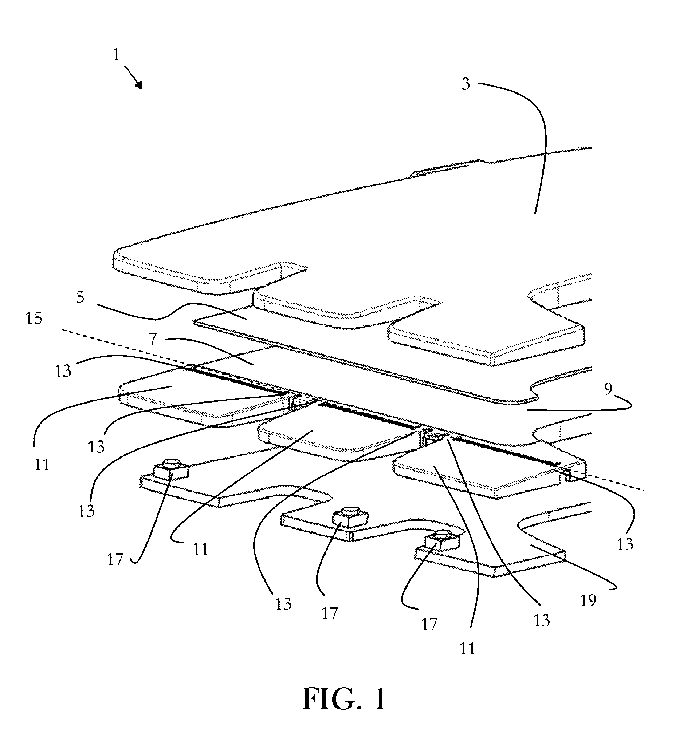

La figure 1 représente une vue en éclaté d'un dispositif de commande 1 d'organe électriques ou électroniques selon l'invention.

Par organes électriques ou électroniques, on entend par exemple un système de climatisation, un système audio, un système de navigation, un système de téléphonie, des commandes de lève-vitres motorisés, des commandes de réglages de rétroviseurs extérieurs, des commandes de réglage en position d'un toit ouvrant, des commandes d'éclairages intérieurs, des commandes de réglages d'un siège de véhicule automobile.

Le dispositif de commande 1 comporte une couche souple de protection 3, un capteur à surface tactile 5 en partie soutenu par une plaque 7.

Le capteur 5 et la plaque 7 sont recouverts par la couche souple de protection 3.

La couche souple de protection 3 est par exemple une peau, réalisée en une matière élastique, de préférence en caoutchouc ou en silicone, pour garantir une protection efficace du capteur 5 contre les risques de rayures ou de salissures tout en présentant un aspect tactile et visuel agréable pour l'utilisateur.

La couche de protection 3 est, par exemple, fixée latéralement sur les côtés de la plaque 7.

D'autres matières plus rigides, non élastiques mais déformables, telles que le polycarbonate ou des matières à base de mélange de métal et de silicone, peuvent être utilisées.

Cette couche souple de protection 3 peut être opaque et comporter au moins un pictogramme transparent ou translucide, c'est-à-dire laissant passer la lumière, contrairement au reste de la couche de protection 3.

Les pictogrammes peuvent être gravés dans la couche souple de protection 3, chaque pictogramme étant associé à au moins une fonction de commande du capteur 5.

La couche de protection 3 en partie opaque permet le rétroéclairage des pictogrammes, comme on le décrira plus loin.

Sous la couche de protection 3, le dispositif de commande 1 comporte la plaque 7, de préférence en plastique, présentant au moins une première portion 9 et au moins une deuxième portion 11, adjacentes.

Le capteur à surface tactile 5 est disposé en sandwich entre la couche de protection et la première portion de la plaque 9, comme on peut le voir sur la figure 1.

Le capteur à surface tactile 5 est avantageusement un capteur sensible à la pression exercée sur la couche souple de protection 3, tel qu'un capteur à surface tactile réalisé selon la technologie connue sous le nom FSR.

Alternativement, le capteur à surface tactile 5 peut être un capteur capacitif sensible à la variation de capacité exercée sur la couche souple de protection 3.

Selon l'invention, le dispositif 1 comprend au moins un film charnière 13 reliant la première 9 à la deuxième portion 11 de la plaque 7. Un film charnière est une partie de paroi dont l'épaisseur est réduite en une zone autorisant un pivotement.

Dans le dispositif 1, la plaque 7 présente donc au moins une zone amincie formant le film charnière 13 pour articuler les deux portions 9, 11 l'une par rapport à l'autre autour de l'axe 15.

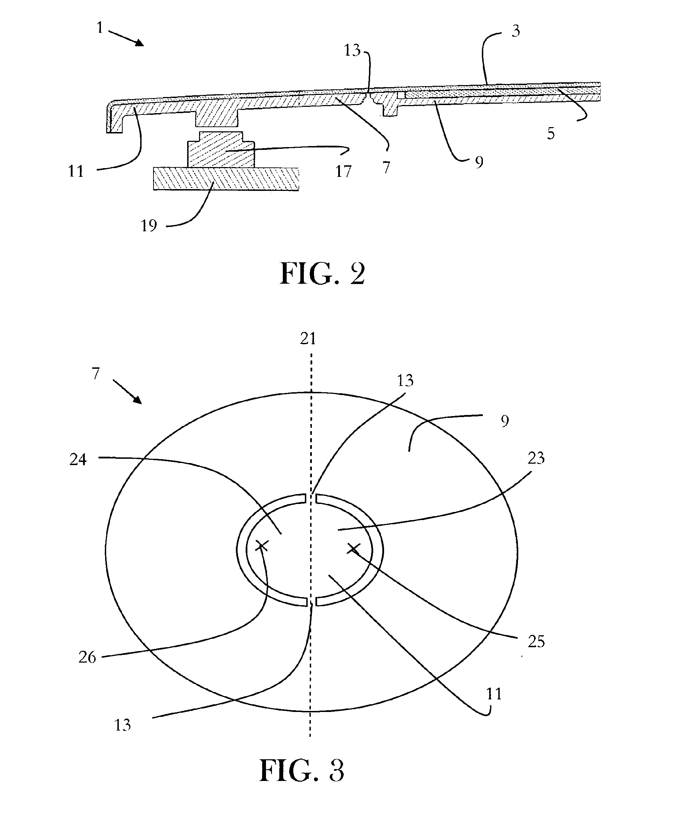

La première portion 9 de la plaque 7 est fixe et la deuxième portion 11 est mobile en pivotement entre une position de repos soulevée (position sensiblement horizontale) illustrée sur la figure 2 et une position active (position légèrement abaissée par rapport à la position de repos).

Cette dernière position est par exemple obtenue en appuyant avec le bout d'un doigt sur la portion 11 de la plaque 7. A titre d'exemple, la course de l'extrémité libre de la portion 11 pour s'abaisser vers une position d'actionnement est comprise entre moins d'un millimètre et quelques millimètres, par exemple 5 mm. De préférence, la position d'actionnement est la position de fin de course obtenue lors d'un appui.

Au moins un commutateur 17, connecté à une carte à circuit imprimé 19 du dispositif de commande 1, est associé à la deuxième portion 11.

Le commutateur 17 peut être activé par la position active de la deuxième portion 11.

Selon un premier mode de réalisation illustré par les figures 1 à 3, le dispositif de commande 1 comporte deux films charnière 13 parallèles et distants l'un de l'autre.

Avantageusement, la deuxième portion 11 mobile est située en périphérie de la première portion fixe 9 et présente la forme d'une palette.

Ainsi, le dispositif de commande 1 représenté comporte trois commutateurs 17 (figure 1) activables par le pivotement de trois palettes 11 mobiles.

On prévoit également que la couche souple de protection 3 comporte au moins un pictogramme transparent ou translucide associé à au moins une fonction de commande du commutateur 17.

La plaque 7 et le capteur à surface tactile 5 sont également prévus en partie transparents ou translucides.

En outre, le dispositif de commande électrique 1 comporte au moins une source lumineuse disposée en face arrière de la plaque 7 et agencée de sorte que la lumière émise par chaque source lumineuse forme une tache lumineuse de taille supérieure ou équivalente à la taille d'un pictogramme associé à éclairer sur la couche souple de protection 3.

Le rétroéclairage des pictogrammes est réalisé par des diodes électroluminescentes prévues dans la carte à circuit imprimé 19 pour éclairer la face arrière de la plaque de support 7 et ainsi les pictogrammes.

Avantageusement, le commutateur 17 ou la surface tactile 5 sont aptes à activer les sources lumineuses.

Selon un deuxième mode de réalisation, la deuxième portion mobile est entourée par la première portion fixe.

De préférence, la plaque 7 du dispositif de commande 1 comporte deux films charnière 13, comme illustré par la figure 3.

Chaque film charnière 13 forme un pivot. Les deux pivots sont formés de part et d'autre de la deuxième portion 11 de plaque 7 formant un axe de pivotement 21 de la portion 11 mobile.

Sur cette figure, la deuxième portion 11 mobile présente une forme générale de disque.

La première portion 9 fixe peut présenter par exemple la forme d'un anneau ou d'un rectangle.

Avantageusement, une première partie 23 du disque 11 est agencée pour être apte à activer un premier commutateur.

Ce premier commutateur est positionné face à la plaque 7, à l'emplacement représenté par la croix 25.

Une deuxième partie 24 du disque 11 est agencée pour être apte à activer un second commutateur positionné face à la plaque 7 au niveau de la croix 26.

On comprend donc que le dispositif de commande 1 comprenant au moins un film charnière 13 reliant en articulation deux portions 9, 11 de plaque 7, l'une 9 fixe portant un capteur à surface tactile 5 et l'autre 11, mobile en pivotement entre une position de repos soulevée et une position active pour pouvoir activer le commutateur 17, est un dispositif robuste, ergonomique, et de fabrication simple et de faible coût.

## Revendications

1. Dispositif de commande comportant une plaque (7) présentant au moins une première (9) et une deuxième portions (11) adjacentes, une couche souple de protection (3) recouvrant la plaque (7) et un capteur à surface tactile (5) disposé en sandwich entre ladite couche de protection (3) et la première portion (9) de la plaque (7), **caractérisé en ce qu'**il comprend au moins un film charnière (13) reliant la première (9) à la deuxième portion (11) pour articuler les deux portions (9, 11) l'une par rapport à l'autre, la première portion (9) étant fixe, et au moins un commutateur (17) associé à la deuxième portion (11) qui est mobile en pivotement entre une position de repos soulevée et une position active pour pouvoir activer le commutateur (17).

2. Dispositif de commande selon la revendication 1, **caractérisé en ce qu'**il comporte deux films charnière (13) parallèles et distants l'un de l'autre.

3. Dispositif de commande selon l'une quelconque des revendications 1 ou 2, **caractérisé en ce que** la deuxième portion (11) mobile est située en périphérie de la première portion (9) fixe.

4. Dispositif de commande selon l'une quelconque des revendications précédentes, **caractérisé en ce que** la deuxième portion (11) mobile présente la forme d'une palette.

5. Dispositif de commande selon l'une quelconque des revendications précédentes, **caractérisé en ce que** la deuxième portion (11) mobile est entourée par la première portion (9) fixe.

6. Dispositif de commande selon la revendication 5, **caractérisé en ce qu'**il comporte deux films charnière (13) comportant deux pivots formés de part et d'autre de la deuxième portion (11) de plaque (7) et définissant un axe de pivotement (21).

7. Dispositif de commande selon l'une quelconque des revendications 5 ou 6, **caractérisé en ce que** la deuxième portion (11) présente une forme générale de disque.

8. Dispositif de commande selon la revendication 7, **caractérisé en ce qu'**une première partie (23) du disque (11) est agencée pour être apte à activer un premier commutateur et une deuxième partie (24) du disque (11) est agencée pour être apte à activer un second commutateur.

9. Dispositif de commande selon l'une quelconque des revendications précédentes, **caractérisé en ce que** le capteur à surface tactile (5) est un capteur sensible à la pression exercée sur la couche souple de protection (3), tel qu'un capteur réalisé selon la technologie connue sous le nom FSR.

10. Dispositif de commande selon l'une quelconque des revendications 1 à 8, **caractérisé en ce que** le capteur à surface tactile (5) est un capteur capacitif sensible à la variation de capacité exercée sur la couche souple de protection (3).

## Claims

1. Control device that comprises a plate (7) having at least first (9) and second (11) adjacent portions, a flexible protection layer (3) covering the plate (7), and a touch-surface sensor (5) sandwiched between said protection layer (3) and the first portion (9) of the plate (7), **characterized in that** it comprises at least one hinging film (13) connecting the first portion (9) to the second portion (11) for hinging both portions (9, 11) relative to each other, the first portion (9) being fixed, and at least one switch (17) associated with the second portion (11) that is capable of pivotal movement between a raised rest position and an active position for activating the switch (17).

2. Control device according to Claim 1, **characterized in that** it includes two parallel spaced hinging films (13).

3. Control device according to either of Claims 1 or 2, **characterized in that** the mobile second portion (11) is situated at the periphery of the fixed first portion (9).

4. Control device according to any of the preceding claims, **characterized in that** the mobile second portion (11) has the shape of a paddle.

5. Control device according to any of the preceding claims, **characterized in that** the mobile second portion (11) is surrounded by the fixed first portion (9).

6. Control device according to Claim 5, **characterized in that** it includes two hinging films (13) including two pivots formed on either side of the second portion (11) of the plate (7) and defining a pivot axis (21).

7. Control device according to either of Claims 5 or 6, **characterized in that** the second portion (11) is generally disk-shaped.

8. Control device according to Claim 7, **characterized in that** a first part (23) of the disk (11) is adapted to activate a first switch and a second part (24) of the disk (11) is adapted to activate a second switch.

9. Control device according to any of the preceding claims, **characterized in that** the touch-sensitive surface sensor (5) is a sensor responsive to the pressure exerted on the flexible protection layer (3), such as a sensor produced using the known FSR technology.

10. Control device according to any of Claims 1 to 8, **characterized in that** the touch-sensitive surface sensor (5) is a capacitive sensor responsive to the variation of capacity exerted on the flexible protection layer (3).

## Patentansprüche

1. Steuervorrichtung, die eine Platte (7), die mindestens einen ersten (9) und einen zweiten benachbarten Teil (11) aufweist, eine die Platte (7) bedeckende flexible Schutzschicht (3) und einen Sensor mit berührungsempfindlicher Oberfläche (5) aufweist, der zwischen der Schutzschicht (3) und dem ersten Teil (9) der Platte (7) eingefügt angeordnet ist, **dadurch gekennzeichnet, dass** sie mindestens eine Scharnierfolie (13), die den ersten (9) mit dem zweiten Teil (11) verbindet, um die zwei Teile (9, 11) aneinander anzulenken, wobei der erste Teil (9) ortsfest ist, und mindestens einen Schalter (17) enthält, der dem zweiten Teil (11) zugeordnet ist, welcher zwischen einer angehobenen Ruhestellung und einer aktiven Stellung schwenkbeweglich ist, um den Schalter (17) betätigen zu können.

2. Steuervorrichtung nach Anspruch 1, **dadurch gekennzeichnet, dass** sie zwei parallele und voneinander entfernte Scharnierfolien (13) aufweist.

3. Steuervorrichtung nach einem der Ansprüche 1 oder 2, **dadurch gekennzeichnet, dass** der zweite bewegliche Teil (11) sich am Umfang des ersten ortsfesten Teils (9) befindet.

4. Steuervorrichtung nach einem der vorhergehenden Ansprüche, **dadurch gekennzeichnet, dass** der zweite bewegliche Teil (11) die Form einer Fahne hat.

5. Steuervorrichtung nach einem der vorhergehenden Ansprüche, **dadurch gekennzeichnet, dass** der zweite bewegliche Teil (11) vom ersten ortsfesten Teil (9) umgeben ist.

6. Steuervorrichtung nach Anspruch 5, **dadurch gekennzeichnet, dass** sie zwei Scharnierfolien (13) aufweist, die zwei Drehpunkte aufweisen, welche zu beiden Seiten des zweiten Teils (11) der Platte (7) geformt sind und eine Schwenkachse (21) definieren.

7. Steuervorrichtung nach einem der Ansprüche 5 oder 6, **dadurch gekennzeichnet, dass** der zweite Teil (11) eine allgemeine Scheibenform aufweist.

8. Steuervorrichtung nach Anspruch 7, **dadurch gekennzeichnet, dass** ein erster Bereich (23) der Scheibe (11) eingerichtet ist, um einen ersten Schalter betätigen zu können, und ein zweiter Bereich (24) der Scheibe (11) eingerichtet ist, um einen zweiten Schalter betätigen zu können.

9. Steuervorrichtung nach einem der vorhergehenden Ansprüche, **dadurch gekennzeichnet, dass** der Sensor mit berührungsempfindlicher Fläche (5) ein auf den auf die flexible Schutzschicht (3) ausgeübten Druck ansprechender Sensor ist, wie ein Sensor, der gemäß der unter dem Namen FSR bekannten Technologie hergestellt wird.

10. Steuervorrichtung nach einem der Ansprüche 1 bis 8, **dadurch gekennzeichnet, dass** der Sensor mit berührungsempfindlicher Oberfläche (5) ein kapazitiver Sensor ist, der auf die auf die flexible Schutzschicht (3) ausgeübte Kapazitätsänderung anspricht.
